# EUROPÄISCHE PATENTANMELDUNG

(11) **EP 3 064 735 A1**
(43) Veröffentlichungstag der Anmeldung: **07.09.2016**
(21) Anmeldenummer: 15200640.9
(22) Anmeldetag: 17.12.2015
(51) Int. Cl.: F01P 7/16

(54) **VERFAHREN ZUM BETRIEB EINER WÄRMETAUSCHERANORDNUNG IN EINEM KRAFTFAHRZEUG UND WÄRMETAUSCHERANORDNUNG FÜR EIN KRAFTFAHRZUEG**

(30) Priorität: 02.03.2015 DE 102015203648
(71) Anmelder: Ford Global Technologies, LLC, Dearborn, MI 48126 (US)
(72) Erfinder: Brinkmann, Bernd, 41539 Dormagen (DE); Tietze, Julian, 50931 Köln (DE); Lewis, Hamish, Troy, MI Michigan 48083 (US)
(74) Vertreter: Dörfler, Thomas

(57) **Zusammenfassung**

Die Erfindung betrifft ein Verfahren zum Betrieb einer Wärmetauscheranordnung in einem Kraftfahrzeug und eine Wärmetauscheranordnung für ein Kraftfahrzeug mit einem Kühlmittelkreislauf für Motorkühlmittel, in dem ein erster Wärmetauscher zum Abkühlen des Motorkühlmittels und ein zweiter Wärmetauscher zum Wärmeaustausch zwischen dem Motorkühlmittel und einem Getriebefluid angeordnet sind. Die Erfindung ist dadurch gekennzeichnet, dass zusammen mit dem Betrieb der Wärmetauscheranordung ein einstellbares Temperaturregelungselement im Kühlmittelkreislauf betrieben wird, ein einstellbares Temperaturniveau des Motorkühlmittels auf einen einstellbaren Wert geregelt wird und das einstellbare Temperaturniveau in Abhängigkeit von einem Kühlbedarf oder einem Heizbedarf des Getriebefluids eingestellt wird.

## Beschreibung

Die Erfindung betrifft ein Verfahren zum Betrieb einer Wärmetauscheranordnung in einem Kraftfahrzeug und eine Wärmetauscheranordnung für ein Kraftfahrzeug mit einem Kühlmittelkreislauf für ein Motorkühlmittel, in dem ein erster Wärmetauscher zum Abkühlen des Motorkühlmittels und ein zweiter Wärmetauscher zum Wärmeaustausch zwischen dem Motorkühlmittel und einem Getriebefluid angeordnet sind.

Solche Verfahren und Wärmetauscheranordnungen sind bekannt und werden dazu verwendet, das Getriebefluid mittels Wärmeaustausch mit dem Motorkühlmittel so zu temperieren, dass das Getriebe, durch welches das Getriebefluid zirkuliert, auf eine Betriebstemperatur gebracht wird oder auf einer Betriebstemperatur gehalten wird, die in einem bevorzugten Bereich liegt.

Die DE 10 2011 016 793 A1 beschreibt ein Verfahren und eine Wärmetauschereinrichtung mit zwei Betriebsarten, wobei das Getriebefluid entweder durch das Motorkühlmittel gekühlt werden kann, oder aber durch das Motorkühlmittel aufgewärmt werden kann, wenn das Getriebe seine Betriebstemperatur noch nicht erreicht hat. Ein Nachteil des dort beschriebenen Verfahrens besteht aber in der aufwendigen Steuerung des Kühlmittelflusses, der je nach Betriebsart unterschiedlich ist. So wird im Kühlmodus das Motorkühlmittel zuerst durch einen ersten Wärmetauscher geleitet, der das Motorkühlmittel abkühlt, und anschließend zur Kühlung des Getriebefluids durch einen zweiten Wärmetauscher, durch den auch das Getriebefluid zirkuliert. Dies ist sinnvoll, da so für eine effektive Kühlung des Getriebefluids möglichst kühles Motorkühlmittel bereitgestellt werden kann und damit eine möglichst große, den Wärmeübergang treibende, Temperaturdifferenz zwischen kühlem Motorkühlmittel und heißem Getriebefluid. Soll allerdings das Getriebefluid mit Hilfe des durch den Motor vorgewärmten Motorkühlmittels aufgeheizt werden, wird eine andere Durchströmung der Wärmetauscheranordnung realisiert. Das Motorkühlmittel wird dann zuerst unter Erhöhung der Fluidtemperatur des Getriebefluids durch den zweiten Wärmetauscher geleitet und anschließend durch den ersten Wärmetauscher, oder am ersten Wärmetauscher vorbei, wenn keine weitere Kühlung des Motorkühlmittels erfolgen soll. Auch dieses ist sinnvoll, da auch im Aufheizmodus die treibende Temperaturdifferenz zwischen Motorkühlmittel und Getriebefluid so groß wie möglich sein soll, zumindest aber einen gewissen Mindestwert haben soll. Allerdings erfordert die Einstellung von entweder Kühlmodus oder Aufheizmodus mit oder ohne weitere Kühlung des Motorkühlmittels eigens vorzusehende Ventileinrichtungen und Umgehungsleitungen. Einfacher und kostengünstiger im Hinblick auf die erforderlichen Bauteile und Baugruppen wäre es, Kühlmodus und Aufheizmodus unter Beibehaltung einer grundsätzlich unveränderten Durchströmungsreihenfolge zu verwirklichen.

In der EP 1 653 062 A1 werden ein System und ein Verfahren zur Öltemperatur-Regelung offenbart. Ein Kühlmittel-Öl-Wärmetauscher wird dabei so angeordnet, dass sein kühlmittelseitiger Vorlauf mit entweder vom Motorkühler oder vom Motor über eine Kühler-Bypassleitung kommenden Motorkühlmittel beschickt wird, je nachdem ob das Öl gekühlt oder geheizt werden soll. Die Zieltemperatur des Öls liegt dabei im bevorzugten Bereich von 90°C bis 130°C. Wenn das Öl aufgeheizt werden soll, aber die Temperatur des Motorkühlmittels unterhalb der Öltemperatur liegt, so wird der Kühlmittel-Öl-Wärmetauscher mittels einer Bypassleitung umgangen. Heizfunktion oder Kühlfunktion werden hier ohne ein Umschalten der Durchströmungsreihenfolge durchgeführt. Allerdings ist auch eine Kühler-Bypassleitung unbedingt erforderlich, um eine Öl-Aufheizung durch Wärmeaustausch mit dem Motorkühlmittel zu realisieren, wenn das Motorkühlmittel zwar wärmer als das Öl, aber noch nicht so warm ist, das es durch den Motorkühler gekühlt werden müsste und dementsprechend das Thermostat geöffnet wäre. Die zwingende Verwendung einer Kühler-Bypassleitung bringt den Nachteil mit sich, dass damit Wärmeverluste einhergehen können, weswegen solche Leitungen während des Motorwarmlaufs oft durch entsprechende Ventile geschlossen werden.

Ein Kühlsystem für ein Fahrzeug mit einem Getriebekühlkreislauf wird in der DE 10 2011 078 088 A1 beschrieben. Hier umfasst der Getriebekühlkreislauf neben einem Getriebeöl-Motorkühlwasser-Wärmetauscher auch eine Bypassleitung und ein Steuerelement, so dass der Getriebeöl-Motorkühlwasser-Wärmetauscher überbrückt werden kann, solange die Temperatur im Kühlwasserkreislauf des Fahrzeuges oberhalb einer vorgegebenen Solltemperatur des Getriebekühlkreislaufs liegt. Hier wird ein weiteres Problem offenbar dergestalt, dass die notwendige Kühlung des Getriebefluids nicht gewährleistet werden kann, wenn die Temperatur des Motorkühlmittels nicht deutlich niedriger ist als die Solltemperatur des Getriebefluids. Die erforderliche Temperaturdifferenz hängt dabei auch ab von der Leistungsfähigkeit des verwendeten Wärmetauschers und den realisierbaren Motorkühlmittel-Massenströmen.

Dem speziellen Problem eines zu geringen Motorkühlmittel-Massenstromes begegnet beispielsweise die DE 10 2011 120 206 A1. Hier wird ein Kühlmittelkreislauf aufweisend einen großen und einem kleinen Kühlmittelkreislauf beschrieben, bei dem ein Getriebeölwärmetauscher abhängig von der Getriebeöltemperatur und von dem Druck im großen Kühlmittelkreislauf mit Kühlmittel aus dem kleinen oder dem großen Kühlmittelkreislauf beaufschlagt werden kann. Der kleine Kühlmittelkreislauf wird insbesondere dazu herangezogen, durch sein höheres Druckniveau eine ausreichende Durchströmung des Getriebeölwärmetauschers zu ermöglichen, wenn der Druck im großen Kühlmitelkreislauf zu gering ist.

Aus der DE 10 2013 019 319 A1 ist eine Kühlanordnung für einen Kraftfahrzeugantriebsstrang bekannt, die eine erste und eine zweite Kühlpumpe enthält. Die zweite Kühlpumpe kann dabei in Situationen, bei denen von der ersten Kühlpumpe nicht hinreichend Kühlfluid bereitgestellt werden kann, zusätzlichen Volumenstrom an Kühlfluid zu liefern.

In der US 2009/0101312 A1 werden ein System und ein Verfahren zur Regulierung der Temperaturen von Getriebefluid und Motorkühlmittel in einem Kraftfahrzeug dargelegt. Hier wird zusätzlich zu dem Getriebefluid-Motorkühlmittel-Wärmetauscher ein weiterer Wärmetauscher, der von Luft durchströmt sein kann, zur Kühlung des Getriebefluids vorgesehen. Wenn die Temperatur des Getriebefluids am Auslass des ersten Getriebefluid-Motorkühlmittel-Wärmetauschers noch zu hoch ist, kann der zweite Wärmetauscher zugeschaltet werden. Damit wird dem bereits erwähnten Problem der unzureichenden Kühlung des Getriebefluids bei zu heißem Motorkühlmittel begegnet. Allerdings bedeutet der Einsatz eines solchen zweiten Wärmetauschers, dass Kosten und Komplexität des Getriebekühlkreislaufs deutlich erhöht werden.

Aus der DE 10 2011 056 085 A1 ist ein Wärmetauscher-System bekannt, das einen Wärmetauscher aufweist, um Wärme zwischen einem Kühlmittel, einem Automatikgetriebeöl eines Automatikgetriebes und/oder einem Getriebeöl einer Differential-Vorrichtung auszutauschen. Durch einen Wärmeaustausch mit zwei Getrieben kann die Komplexität der Temperierung der Getriebe optimiert werden, die zuvor beschriebenen grundsätzlichen Einschränkungen bleiben dabei jedoch natürlich bestehen.

Aufgabe der vorliegenden Erfindung ist es daher, zur effektiveren Temperierung eines Getriebefluids, insbesondere eines Getriebeöls, und unter reduziertem Kosteneinsatz, ein Verfahren zum Betrieb einer Wärmetauscheranordnung und eine Wärmetauscheranordnung für ein Kraftfahrzeug bereitzustellen.

Gelöst wird diese Aufgabe durch ein Verfahren nach Anspruch 1 und eine Vorrichtung nach Anspruch 7. Dabei wird zusammen mit dem Betrieb der Wärmetauscheranordung ein einstellbares Temperaturregelungselement im Kühlmittelkreislauf betrieben, womit ein einstellbares Temperaturniveau des Motorkühlmittels auf einen einstellbaren Wert geregelt wird, und wobei das einstellbare Temperaturniveau in Abhängigkeit von einem Kühlbedarf oder einem Heizbedarf des Getriebefluids eingestellt wird.

Unter einem einstellbaren Temperaturregelungselement, womit das einstellbare Temperaturniveau des Motorkühlmittels auf einen einstellbaren Wert geregelt wird, ist dabei beispielhaft, aber nicht ausschließlich ein Thermostat zu verstehen, dessen Arbeitspunkt verstellt werden kann. Ein solches einstellbares Thermostat steuert den Durchfluss von Motorkühlmittel durch den ersten Wärmetauscher, d.h. den Volumenstrom oder Massenstrom des Kühlmittels, durch Variation eines freien Querschnittes in Abhängigkeit von der Temperatur des Motorkühlmittels.

Der erste Wärmetauscher kann beispielsweise ein Motorkühler sein, der Wärme des Motorkühlmittels an die Umgebung des Fahrzeugs abgibt, insbesondere an Umgebungsluft, die durch diesen Wärmetauscher geleitet wird.

Temperaturniveau bedeutet im Sinne dieser Erfindung eine Temperatur, die charakteristisch ist für einen Temperaturbereich um eine Solltemperatur des Motorkühlmittels, in dem sich die tatsächliche Kühlmitteltemperatur bewegt. Abweichungen von der eigentlichen Solltemperatur innerhalb dieses Bereiches ergeben sich üblicherweise etwa durch die Regelungscharakteristik des Temperaturregelungselements, aber auch durch sekundäre Effekte wie zum Beispiel Verlust oder Eintrag von Wärme an verschiedenen Stellen im Kühlmittelkreislauf, oder etwa durch Druckbeaufschlagung des Temperaturregelungselements durch Pumpen im Kühlmittelkreislauf.

Ein Kühlbedarf des Getriebefluids liegt vor, wenn eine Temperatur des Getriebefluids höher ist als eine obere Grenze eines bevorzugten Bereiches, oder wenn die Temperatur des Getriebefluids ansteigt und es absehbar ist, dass die obere Grenze des bevorzugten Bereiches überschritten werden wird. Der Kühlbedarf kann dabei hoch oder niedrig sein, je nachdem wie weit die obere Grenze des bevorzugten Temperaturbereichs überschritten wird oder wie stark die Temperatur des Getriebefluids ansteigt. Bei großer Überschreitung der oberen Grenze des bevorzugten Bereiches ist der Kühlbedarf hoch, bei geringer Überschreitung ist er niedrig. Bei starkem Temperaturanstieg, d.h. bei einer großen positiven Temperaturänderung über der Zeit, ist der Kühlbedarf hoch, bei einer kleinen positiven Temperaturänderung über der Zeit ist er niedrig. Der Durchsatz des Getriebefluids durch das Getriebe und/oder den Getriebekühlkreislauf, d.h. der Volumenstrom oder Massenstrom des Getriebefluids, ist ein weiteres Kriterium für die Höhe des Kühlbedarfs im Sinne eines erforderlichen Wärmestroms, da er ein Maß für die Wärmekapazität ist, die innerhalb einer vorgegebenen Zeit gekühlt werden muss.

Ein Heizbedarf des Getriebefluids liegt vor, wenn die Temperatur des Getriebefluids niedriger ist als eine untere Grenze eines bevorzugten Bereiches, oder wenn die Temperatur des Getriebefluids fällt und es absehbar ist, dass die untere Grenze des bevorzugten Bereiches unterschritten werden wird. Der Heizbedarf kann dabei hoch oder niedrig sein, je nachdem wie weit die untere Grenze des bevorzugten Temperaturbereichs unterschritten wird oder wie stark die Temperatur des Getriebfluids fällt. Bei großer Unterschreitung der unteren Grenze des bevorzugten Bereiches ist der Heizbedarf hoch, bei geringer Unterschreitung ist er niedrig. Bei starkem Temperaturabfall, d.h. bei einer großen negativen Temperaturänderung über der Zeit, ist der Heizbedarf hoch, bei einer kleinen negativen Temperaturänderung über der Zeit ist er niedrig. Der Durchsatz des Getriebefluids durch das Getriebe und/oder den Getriebekühlkreislauf, d.h. der Volumenstrom oder Massenstrom des Getriebefluids, ist ein weiteres Kriterium für die Höhe des Heizbedarfs im Sinne eines erforderlichen Wärmestroms, da er ein Maß für die Wärmekapazität ist, die innerhalb einer vorgegebenen Zeit aufgeheizt werden muss.

Erfindungsgemäß wird das Temperaturniveau des Motorkühlmittels so eingestellt, dass das Getriebefluid durch Wärmeaustausch gekühlt wird, wenn ein Kühlbedarf vorliegt. Die Höhe des Kühlbedarfs kann dann bei dem erfinderischen Verfahren dazu herangezogen werden, das Temperaturniveau des Motorkühlmittels so einzustellen, dass sich eine Temperaturdifferenz ergibt, die umso größer ist, je höher der Kühlbedarf ist. Da die Temperaturdifferenz zwischen Getriebefluid und Motorkühlmittel den Wärmeübergang treibt, kann so der Wärmestrom und damit die Kühlleistung des zweiten Wärmetauschers zum Wärmeaustausch zwischen dem Motorkühlmittel und dem Getriebefluid reguliert und dem Kühlbedarf angepasst werden.

Ebenso wird bei dem erfinderischen Verfahren das Temperaturniveau des Motorkühlmittels so eingestellt, dass das Getriebefluid durch Wärmeaustausch geheizt wird, wenn ein Heizbedarf vorliegt. Die Höhe des Heizbedarfs kann dann dazu herangezogen werden, das Temperaturniveau des Motorkühlmittels so einzustellen, dass sich eine Temperaturdifferenz ergibt, die umso größer ist, je höher der Heizbedarf ist. Da die Temperaturdifferenz zwischen Motorkühlmittel und Getriebefluid den Wärmeübergang treibt, kann so der Wärmestrom und damit die Heizleistung des zweiten Wärmetauschers zum Wärmeaustausch zwischen dem Motorkühlmittel und dem Getriebefluid reguliert und dem Heizbedarf angepasst werden.

Das erfindungsgemäße Einstellen des Temperaturniveaus des Motorkühlmittels in Abhängigkeit von einem Kühlbedarf oder einem Heizbedarf des Getriebefluids kann dazu führen, dass der Betrieb des Motors, insbesondere eines Verbrennungsmotors, beeinflusst wird. Sollte also zum Zwecke der Motorkühlung oder des Motorwarmlaufs eine andere Einstellung des Temperaturniveaus günstig sein, kann die Einstellung anhand einer Priorisierung oder Überlagerung der verschiedenen Anforderungen zur Temperierung des Getriebes und des Motors erfolgen.

Das gilt in gleicher oder ähnlicher Weise auch für Anforderungen seitens der Kabinenheizung und/oder anderer thermischer Systeme im Fahrzeug.

In einer bevorzugten Ausgestaltung der Erfindung wird eine Temperatur des Getriebefluids direkt oder indirekt ermittelt und der Kühlbedarf oder der Heizbedarf anhand dieser Temperatur bestimmt. Die direkte Ermittlung der Temperatur des Getriebefluids kann beispielsweise durch einen Temperatursensor, der mit dem Getriebfluid in Kontakt steht, erfolgen. Für die indirekte Ermittlung der Temperatur des Getriebefluids bieten sich verschiedene Möglichkeiten an, mit denen auf einen eigens vorzusehenden Getriebefluid-Temperatursensor verzichtet werden kann. Eine Möglichkeit ist es, eine oder mehrere gemessene Temperatur(en) von Bauteilen, Bauteiloberflächen oder anderen Fluiden, die mit dem Getriebefluid in Kontakt stehen, heranzuziehen und die Getriebefluidtemperatur dann durch eine Modellierung der entsprechenden Stoff- und Wärmeströme rechnerisch zu bestimmen. Ein anderer Ansatz ist es, die Wärmeerzeugung im Getriebe zu berechnen, basierend auf Parametern, die den Fahrzeugbetrieb und insbesondere die Getriebebelastung beschreiben, wie beispielsweise Fahrgeschwindigkeit, Fahrzeuggewicht, Fahrbahnsteigung, Fahrzeugbeschleunigung, Motordrehzahl, Gangstufe des Getriebes. Eine Vielzahl weiterer Parameter ist üblicherweise über das Bordnetz des Fahrzeugs verfügbar und kann ebenfalls verwendet werden. Aus der Wärmeerzeugung im Getriebe kann dann auf die Temperatur des Getriebefluids zurückgeschlossen werden. Gegebenenfalls kann durch Berücksichtigung weiterer Daten wie etwa Wärmekapazität des Getriebes und des Getriebefluids, Umgebungstemperatur oder ähnlichem die Genauigkeit der Bestimmung der Temperatur des Getriebefluids verbessert werden.

Der Kühlbedarf oder der Heizbedarf des Getriebefluids kann anhand der Temperatur des Getriebefluids und/oder der Änderung der Temperatur des Getriebefluids mit der Zeit bestimmt werden. Dabei ist zuerst wesentlich, ob Kühlbedarf oder Heizbedarf vorliegt.

Kühlbedarf liegt vor, wenn die Temperatur des Getriebefluids höher ist als ein oberer Grenzwert, oder wenn die Temperatur des Getriebefluids ansteigt und es absehbar ist, dass der obere Grenzwert überschritten werden wird. Was die Änderung der Temperatur mit der Zeit angeht, kann hier im Sinne eines Differentialterms direkt die erste Ableitung der Temperatur nach der Zeit betrachtet werden. Je nachdem, mit welcher Methode die Temperatur bestimmt wird, kann es aber auch sinnvoll sein, eine Filterung oder Mittelung des Signals über bestimmte Zeitintervalle vorzunehmen. Eine überlagernde Betrachtung von Temperatur und Temperaturänderung kann sinnvoll sein, indem beispielsweise die Temperaturänderung umso stärker bewertet wird, je näher die Temperatur an dem oberen Grenzwert liegt, oder indem die zeitliche Ableitung der Temperatur mit einer Zeit multipliziert wird, so dass eine innerhalb dieser Zeit erwartete Temperaturänderung zu der momentanen Temperatur addiert werden kann. Auch andere Ansätze sind möglich.

Wird Kühlbedarf festgestellt, so kann dieser quantifiziert werden. Dazu kann beispielsweise aus der Differenz der Temperatur des Getriebefluids, oder einer mit Hilfe der zeitlichen Temperaturänderung daraus bestimmten Vergleichsgröße, und einem oberen Grenzwert der Temperatur des Getriebefluids ein Maß für die Höhe des Kühlbedarfs abgeleitet werden.

Heizbedarf liegt vor, wenn die Temperatur des Getriebefluids niedriger ist als ein unterer Grenzwert, oder wenn die Temperatur des Getriebefluids fällt und es absehbar ist, dass der untere Grenzwert unterschritten werden wird. Was die Änderung der Temperatur mit der Zeit angeht, kann hier im Sinne eines Differentialterms direkt die erste Ableitung der Temperatur nach der Zeit betrachtet werden. Je nachdem, mit welcher Methode die Temperatur bestimmt wird, kann es aber auch sinnvoll sein, eine Filterung oder Mittelung des Signals über bestimmte Zeitintervalle vorzunehmen. Eine überlagernde Betrachtung von Temperatur und Temperaturänderung kann sinnvoll sein, indem beispielsweise die Temperaturänderung umso stärker bewertet wird, je näher die Temperatur an dem unteren Grenzwert liegt, oder indem die zeitliche Ableitung der Temperatur mit einer Zeit multipliziert wird, so dass eine innerhalb dieser Zeit erwartete Temperaturänderung von der momentanen Temperatur subtrahiert werden kann. Auch andere Ansätze sind möglich.

Wird Heizbedarf festgestellt, so kann dieser quantifiziert werden. Dazu kann beispielsweise aus der Differenz der Temperatur des Getriebefluids, oder einer mit Hilfe der zeitlichen Temperaturänderung daraus bestimmten Vergleichsgröße, und einem unteren Grenzwert der Temperatur des Getriebefluids ein Maß für die Höhe des Heizbedarfs abgeleitet werden.

Bevorzugt wird bei dem erfinderischen Verfahren das einstellbare Temperaturregelungselement im Kühlmittelkreislauf auf ein abgesenktes Temperaturniveau eingestellt, wenn Kühlbedarf des Getriebefluids vorliegt. Abgesenkt bedeutet dabei, dass ein Temperaturniveau eingestellt wird, das niedriger ist als ein für andere Systeme im Fahrzeug, wie beispielsweise die Motorkühlung, günstiges und bevorzugtes Temperaturniveau. Es kann dabei entweder bei Kühlbedarf ein generell niedrigeres Temperaturniveau eingestellt werden, oder auch ein Temperaturniveau, das umso niedriger ist, je höher der Kühlbedarf ist. Die Absenkung des Temperaturniveaus des Motorkühlmittels bewirkt größere den Wärmeübergang treibende, Temperaturdifferenz zwischen kühlem Motorkühlmittel und heißem Getriebefluid, so dass eine höhere Kühlleistung am Getriebefluid-Motorkühlmittel-Wärmetauscher umgesetzt werden kann.

In einer besonders bevorzugten Ausführungsform des erfinderischen Verfahrens wird das einstellbare Temperaturregelungselement im Kühlmittelkreislauf auf ein Temperaturniveau in dem Bereich von 60°C bis 80°C eingestellt, wenn Kühlbedarf des Getriebefluids vorliegt. Es wird dadurch eine Temperaturdifferenz zwischen Getriebefluid und Motorkühlmittel erreicht, die auch bei moderatem Kühlmitteldurchsatz eine wirkungsvolle Abkühlung des Getriebefluids durch den Getriebefluid-Motorkühlmittel-Wärmetauscher ermöglicht.

Vorteilhaft ist es auch, wenn bei dem erfinderischen Verfahren das einstellbare Temperaturregelungselement im Kühlmittelkreislauf auf ein erhöhtes Temperaturniveau eingestellt wird, wenn Heizbedarf des Getriebefluids vorliegt. Erhöht bedeutet dabei, dass ein Temperaturniveau eingestellt wird, das höher ist als ein für andere Systeme im Fahrzeug, wie beispielsweise die Motorkühlung, günstiges und/oder bevorzugtes Temperaturniveau. Es kann dabei entweder bei Heizbedarf ein generell höheres Temperaturniveau eingestellt werden, oder auch ein Temperaturniveau, das umso höher ist, je höher der Heizbedarf ist.

Besonders vorteilhaft ist es, wenn das einstellbare Temperaturregelungselement im Kühlmittelkreislauf auf ein Temperaturniveau in dem Bereich von 95°C bis 110°C eingestellt wird, wenn Heizbedarf des Getriebefluids vorliegt.

Erfindungsgemäß enthält bei der Wärmetauscheranordnung, die zur Durchführung des erfinderischen Verfahrens eingerichtet ist, der Kühlmittelkreislauf ein einstellbares Temperaturregelungselement, das geeignet ist, das Temperaturniveau des Motorkühlmittels auf einen einstellbaren Wert zu regeln, indem es den Durchfluss von Motorkühlmittel durch den ersten Wärmetauscher steuert, und wobei die Anordnung mit einer Steuerungseinheit versehen ist, die geeignet ist, das einstellbare Temperaturniveau in Abhängigkeit von einem Kühlbedarf oder von einem Heizbedarf des Getriebefluids einzustellen.

Das einstellbare Temperaturregelungselement kann im Kühlmittelkreislauf beispielsweise zwischen dem Motor, insbesondere einem Verbrennungsmotor, und dem ersten Wärmetauscher zum Abkühlen des Motorkühlmittels, insbesondere einem Motorkühler, angeordnet sein. Es bietet sich der motorseitige Vorlauf oder Rücklauf an.

Vorzugsweise ist das einstellbare Temperaturregelungselement ein Thermostat mit einem Dehnstoffelement mit elektrischer Beheizung und einem Ventil, wobei sich das Dehnstoffelement bei Erwärmung durch das Motorkühlmittel und/oder durch die elektrische Beheizung ausdehnt und das Ventil öffnet. Ab einer unteren Grenztemperatur beginnt die Öffnung des Ventils und mit steigender Temperatur wird das Ventil weiter geöffnet, so dass sich der Durchsatz des Motorkühlmittels erhöht. Ein elektrisches Heizelement, das mit dem Dehnstoff in Kontakt steht, kann durch Erhöhung der Temperatur des Dehnstoffes bewirken, dass die Öffnung des Ventils schon bei einer niedrigeren Temperatur des Motorkühlmittels erfolgt. Dadurch kann das Temperaturniveau des Motorkühlmittels auf ein niedrigeres Temperaturniveau geregelt werden.

Es ist vorteilhaft, wenn der zweite Wärmetauscher im Parallelstrom zu dem ersten Wärmetauscher im Kühlmittelkreislauf angeordnet ist.

Weiterhin ist es auch vorteilhaft, wenn der zweite Wärmetauscher im Parallelstrom zu einem Heizungswärmetauscher zur Kabinenbeheizung im Kühlmittelkreislauf angeordnet ist.

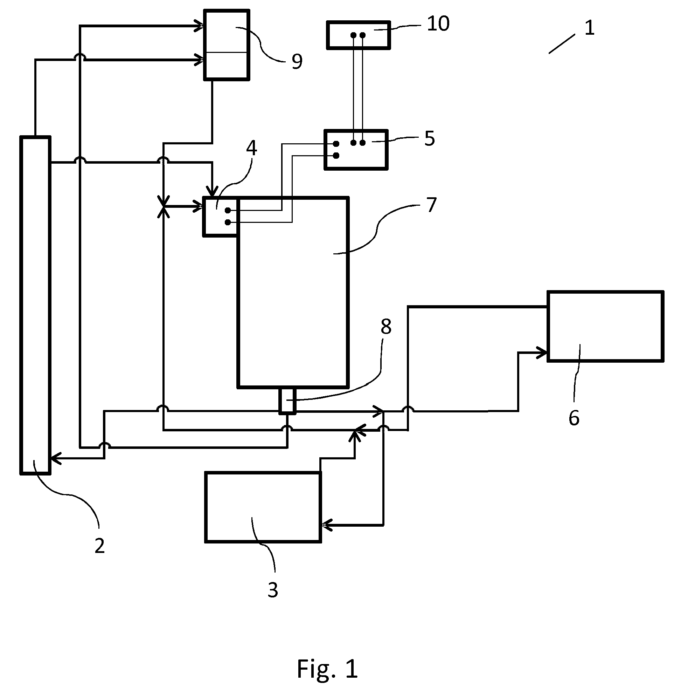

In Fig. 1 ist eine bevorzugte Ausführung der Erfindung dargestellt:
Der Kühlmittelkreislauf **1** für Motorkühlmittel enthält einen ersten Wärmetauscher **2,** der als Motorkühler ausgebildet ist, der Wärme des Motorkühlmittels an die Umgebung abgibt, insbesondere an Umgebungsluft, die durch diesen Wärmetauscher geleitet wird. Ein zweiter Wärmetauscher **3** zum Wärmeaustausch zwischen dem Motorkühlmittel und einem Getriebefluid, insbesondere Getriebeöl, ist im Parallelstrom zu dem ersten Wärmetauscher **2** im Kühlmittelkreislauf **1** angeordnet. Als einstellbares Temperaturregelungselement **4,** womit das Temperaturniveau des Motorkühlmittels auf einen einstellbaren Wert geregelt wird, wird ein Thermostat eingesetzt, dessen Arbeitspunkt verstellt werden kann. Es handelt sich dabei um ein Thermostat mit einem Dehnstoffelement mit elektrischer Beheizung und einem Ventil, wobei sich das Dehnstoffelement bei Erwärmung durch das Motorkühlmittel und/oder durch die elektrische Beheizung ausdehnt und das Ventil öffnet. Das Thermostat ist im Rücklauf des ersten Wärmetauschers **3** angebracht und steuert den Durchfluss von Motorkühlmittel durch den ersten Wärmetauscher. Das einstellbare Temperaturregelungselement **4** ist mit einer Steuerungseinheit **5** verbunden, die geeignet ist, das Temperaturniveau des Motorkühlmittels in Abhängigkeit von einem Kühlbedarf oder von einem Heizbedarf des Getriebefluids an dem Temperaturregelungselement **4** einzustellen. Im Parallelstrom zu dem ersten Wärmetauscher **2** und dem zweiten Wärmetauscher **3** ist ferner ein Heizungswärmetauscher **6** zur Kabinenbeheizung im Kühlmittelkreislauf **1** angeordnet. Das Motorkühlmittel wird vom Motor **7** her kommend über den Kühlmittelauslass **8** des Motors **7** auf den ersten Wärmetauscher **2,** den zweiten Wärmetauscher **3** und den Heizungswärmetauscher **6** verteilt. Ein Ausgleichsbehälter **9** ist im Kühlmittelkreislauf **1** angeordnet, um Druck- und Volumenänderungen des Motorkühlmittels mit sich ändernder Temperatur zu kompensieren und gegebenenfalls gasförmige Anteile des Motorkühlmittels abzuscheiden.

Das Temperaturniveau des Motorkühlmittels wird wie bereits erwähnt mit Hilfe des einstellbaren Temperaturregelungselementes **4** über die Durchströmung des ersten Wärmetauschers eingeregelt, wobei sich hierbei eine Wärmebilanz aus zu- und abgeführten Wärmeströmen ergibt: Durch die Motorabwärme wird das Kühlmittel im Motor **7** erhitzt. Bei Betrieb der Kabinenheizung wird das Kühlmittel in dem Heizungswärmetauscher **6** abgekühlt. In dem zweiten Wärmetauscher **3** wird das Kühlmittel erhitzt oder gekühlt, je nachdem ob das Getriebefluid gekühlt oder aufgeheizt werden soll. Über die Oberflächen der Kühlmittelleitungen und anderer vom Kühlmittel durchströmter Bauteile ergeben sich Wärmeverluste an die Umgebung, oder auch Wärmeeinträge aus der Umgebung des Kühlmittelkreislaufs. Ein aus der Überlagerung dieser Wärmeströme resultierender Wärmüberschuss wird dann über eine Anpassung des Temperaturniveaus des Motorkühlmittels ausgeglichen.

Die Steuerungseinheit **5** ist dazu eingerichtet, das erfindungsgemäße Verfahren durchzuführen, und ist mit dem Bordnetz **10** des Fahrzeugs verbunden. Über das Bordnetz **10** werden Messwerte und Daten von der Sensorik und anderen Steuergeräten des Fahrzeugs an die Steuerungseinheit **5** weitergeleitet. Basierend auf diesen Messwerten und Daten wird in der Steuerungseinheit **5** die Temperatur des Getriebefluids ermittelt. Die Temperatur des Getriebefluids wird dazu verwendet, einen Kühlbedarf des Getriebefluids festzustellen. Wenn ein Kühlbedarf des Getriebefluids vorliegt, dann wird von der Steuerungseinheit **5** das einstellbare Temperaturregelungselement **4** auf ein abgesenktes Temperaturniveau eingestellt.

## Patentansprüche

1. Verfahren zum Betrieb einer Wärmetauscheranordnung in einem Kraftfahrzeug mit einem Kühlmittelkreislauf (1) für Motorkühlmittel, in dem ein erster Wärmetauscher (2) zum Abkühlen des Motorkühlmittels und ein zweiter Wärmetauscher (3) zum Wärmeaustausch zwischen dem Motorkühlmittel und einem Getriebefluid angeordnet sind,
**dadurch gekennzeichnet, dass**
zusammen mit dem Betrieb der Wärmetauscheranordung
- ein einstellbares Temperaturregelungselement (4) im Kühlmittelkreislauf betrieben wird,
- ein einstellbares Temperaturniveau des Motorkühlmittels auf einen einstellbaren Wert geregelt wird,
- das einstellbare Temperaturniveau in Abhängigkeit von einem Kühlbedarf oder einem Heizbedarf des Getriebefluids eingestellt wird.

2. Verfahren nach Anspruch 1,
**dadurch gekennzeichnet, dass**
- eine Temperatur des Getriebefluids direkt oder indirekt ermittelt wird,
- der Kühlbedarf oder der Heizbedarf des Getriebefluids anhand der Temperatur des Getriebefluids und/oder der Änderung der Temperatur des Getriebefluids mit der Zeit bestimmt wird.

3. Verfahren nach einem der vorhergehenden Ansprüche,
**dadurch gekennzeichnet, dass**
- das einstellbare Temperaturregelungselement (4) im Kühlmittelkreislauf (1) auf ein abgesenktes Temperaturniveau eingestellt wird, wenn Kühlbedarf des Getriebefluids vorliegt.

4. Verfahren nach einem der vorhergehenden Ansprüche,
**dadurch gekennzeichnet, dass**
- das einstellbare Temperaturregelungselement (4) im Kühlmittelkreislauf (1) auf ein Temperaturniveau in dem Bereich von 60°C bis 80°C eingestellt wird, wenn Kühlbedarf des Getriebefluids vorliegt.

5. Verfahren nach einem der vorhergehenden Ansprüche,
**dadurch gekennzeichnet, dass**
- das einstellbare Temperaturregelungselement (4) im Kühlmittelkreislauf (1) auf ein erhöhtes Temperaturniveau eingestellt wird, wenn Heizbedarf des Getriebefluids vorliegt liegt.

6. Verfahren nach Anspruch 5,
**dadurch gekennzeichnet, dass**
- das einstellbare Temperaturregelungselement (4) im Kühlmittelkreislauf (1) auf ein Temperaturniveau in dem Bereich von 95°C bis 110°C eingestellt wird, wenn Heizbedarf des Getriebefluids vorliegt.

7. Wärmetauscheranordnung für ein Kraftfahrzeug mit einem Kühlmittelkreislauf (1) für Motorkühlmittel, in dem ein erster Wärmetauscher (2) zum Abkühlen des Motorkühlmittels und ein zweiter Wärmetauscher (3) zum Wärmeaustausch zwischen dem Motorkühlmittel und einem Getriebefluid angeordnet sind, eingerichtet zur Durchführung eines Verfahrens nach einem der vorhergehenden Ansprüche,
**dadurch gekennzeichnet, dass**
der Kühlmittelkreislauf ein einstellbares Temperaturregelungselement (4) enthält, das geeignet ist, das Temperaturniveau des Motorkühlmittels auf einen einstellbaren Wert zu regeln, indem es den Durchfluss von Motorkühlmittel durch den ersten Wärmetauscher (2) steuert, und wobei die Anordnung mit einer Steuerungseinheit (5), versehen ist, die geeignet ist, das einstellbare Temperaturniveau in Abhängigkeit von einem Kühlbedarf oder von einem Heizbedarf des Getriebefluids einzustellen.

8. Wärmetauscheranordnung nach Anspruch 7,
**dadurch gekennzeichnet, dass**
das einstellbare Temperaturregelungselement (4) ein Thermostat mit einem Dehnstoffelement mit elektrischer Beheizung und einem Ventil ist, wobei sich das Dehnstoffelement bei Erwärmung durch das Motorkühlmittel und/oder durch die elektrische Beheizung ausdehnt und das Ventil öffnet.

9. Wärmetauscheranordnung nach Anspruch 7 oder 8,
**dadurch gekennzeichnet, dass**
der zweite Wärmetauscher (3) im Parallelstrom zu dem ersten Wärmetauscher (2) im Kühlmittelkreislauf (1) angeordnet ist.

10. Wärmetauscheranordnung nach einem der Ansprüche 7 bis 9,
**dadurch gekennzeichnet, dass**
der zweite Wärmetauscher (3) im Parallelstrom zu einem Heizungswärmetauscher (6) zur Kabinenbeheizung im Kühlmittelkreislauf angeordnet ist.
